# FASCICULE DE BREVET EUROPEEN

(11) **EP 2 795 474 B1**
(45) Date de publication et mention de la délivrance du brevet: **03.02.2016**
(21) Numéro de dépôt: 12801589.8
(22) Date de dépôt: 14.12.2012
(51) Int. Cl.: G06F 13/40

(54) **SYSTEME ET PROCEDE DE COMMUNICATION ENTRE UN CIRCUIT D'ACQUISITION ET UN CIRCUIT DE TRAITEMENT DE DONNEES**
SYSTEM UND VERFAHREN ZUR KOMMUNIKATION ZWISCHEN EINER DATENERFASSUNGSSCHALTUNG UND DATENVERARBEITUNGSSCHALTUNG
SYSTEM AND METHOD FOR COMMUNICATION BETWEEN A DATA-ACQUISITION CIRCUIT AND A DATA-PROCESSING CIRCUIT

(30) Priorité: 20.12.2011 FR 1161987
(43) Date de publication de la demande: 29.10.2014
(73) Titulaire: Commissariat à l'Énergie Atomique et aux Énergies Alternatives, 75015 Paris (FR)
(72) Inventeur: CHEVOBBE, Stéphane, F-92340 Bourg-la-Reine (FR); DURANTON, Marc, F-91400 Orsay (FR)
(74) Mandataire: Lopez, Frédérique
(86) Numéro de dépôt international: PCT/EP2012/075566
(87) Numéro de publication internationale: WO 2013/092419

(56) Documents cités:
- US-A- 4 747 081
- US-A- 6 166 748

## Description

### Domaine de l'invention

L'invention concerne les systèmes d'acquisition et de traitements de données et plus particulièrement les systèmes de communication entre les circuits d'acquisition et de traitement d'image.

### Etat de la Technique

De nombreux types de capteurs permettent d'acquérir et de produire des signaux qui peuvent constituer une image.

Un système de vision ou imageur intelligent est un module composé d'un capteur d'image associé à des éléments de calcul pour réaliser des traitements d'amélioration ou d'analyse du contenu de l'image captée. Les systèmes de vision connus sont conçus à partir de composants discrets où les capteurs sont reliés aux circuits de traitement par une interface filaire ou transitent successivement toutes les données du capteur. Ces systèmes sont assez encombrants et présentent une consommation élevée qui en limite leur utilisation comme système autonome de faible coût.

L'apparition progressive de l'utilisation de technologies d'intégration dans le domaine des imageurs permet l'intégration sur un même circuit du capteur d'images et du processeur de traitement des images.

Cependant, le mode de couplage entre la zone de capture de l'image et celle de son traitement reste un point primordial pour obtenir un bon compromis entre l'encombrement et les performances de traitement.

Une solution standard consiste à déporter les circuits de lecture de la matrice de données d'acquisition en bout de ligne ou de colonne de la matrice. Les valeurs des données lues sont ensuite envoyées séquentiellement par des liens séries vers une mémoire de masse, aussi appelée mémoire d'image, ou vers des éléments de calcul. Ce mode de couplage entre la zone de capture et la zone de traitement limite fortement la possibilité de faire des traitements complexes en local à faible coût matériel.

Une technologie émergente, basée sur l'empilement de couches de silicium, dénommée « 3D stacking », offre une opportunité pour réaliser des communications parallèles entre la matrice de données d'acquisition et les éléments de calcul, améliorant le couplage en permettant une interconnexion surfacique et non plus périphérique comme pour les circuits traditionnels.

Dans l'article de P. Dudek et al., intitulé "A pixel-parallel cellular processor array in a stacked three-layer 3D silicon-on-insulator technology", European Conference on Circuit Theory and Design, ECCTD 2009, pp 193-197, August 2009, un système de vision intégré utilisant la technologie d'empilement 3D silicium est présenté. Une couche intermédiaire analogique reçoit des données pixel de la couche supérieure du capteur et les communique à une couche inférieure numérique, créant un élément de traitement unitaire (PE cell) dans lequel le flux est distribué sur trois couches au travers de « Through Silicon Vias » (TSV). Dans un tel système mixte analogique/numérique fonctionnant en conversion par pixel, le facteur de remplissage pixel ou « Fill Factor » souffre de limitation diminuant directement la performance du traitement.

Il existe ainsi le besoin d'un système de communication entre un circuit d'acquisition et un circuit de traitement d'image, qui tout en étant adapté à la demande de performance croissante et la complexité des traitements d'image, optimise le facteur de remplissage du pixel.

La présente invention répond à ce besoin.

### Résumé de l'invention

Un objet de la présente invention est de fournir un système de communication entre un circuit d'acquisition et un circuit de traitement de données.

Un objet plus spécifique de la présente invention est de fournir une interface de communication intégrée entre un capteur d'images et un circuit de traitement d'images.

Plus particulièrement, le circuit d'interface comprend un ensemble de circuits de mémorisation agencés de manière à permettre plusieurs opérations simultanées d'écriture série de valeurs d'acquisition tout en permettant indépendamment plusieurs opérations simultanées de lecture série de telles valeurs pour leur traitement.

Préférentiellement, le circuit de communication de la présente invention optimise les systèmes de vision où les capteurs d'image sont des matrices de photodiodes ainsi que les systèmes de vision ayant des capteurs opérant sur différentes longueurs d'ondes réparties dans des matrices bidimensionnelles régulières.

Un autre objet de la présente invention est de fournir un système de vision intégré qui rende transparent pour l'utilisateur l'acquisition d'images utilisant une technique de « rolling-shutter ».

Un autre objet de l'invention est de proposer une méthode d'adressage et de contrôle spécifique de registres, fonctionnant en registres à décalage au moment de l'acquisition des informations en série.

Avantageusement mais sans limitation, l'invention trouvera des applications dans des systèmes de reconnaissance de formes (objets et/ou personnes) ou de suivi d'objets dans les domaines de la robotique, de la sécurité, de l'automobile, de la domotique, ou de la médecine.

Pour obtenir les résultats recherchés, un système de communication tel que décrit dans la revendication indépendante 1 et une méthode de communication telle que décrite dans la revendication indépendante 12 sont proposés.

En particulier, un tel système de communication pour opérer entre un circuit d'acquisition de données et un circuit de traitement de données, comprend:
- au moins un registre à décalage comprenant une entrée série pour recevoir et stocker des données en série du circuit d'acquisition de données et une sortie série pour délivrer des données en série, ledit au moins un registre à décalage comprenant de plus des sorties parallèles pour délivrer en parallèle des données stockées dans ledit registre à décalage ;
- un circuit d'adressage couplé audit au moins un registre à décalage pour identifier les positions des données stockées dans ledit au moins un registre à décalage ; et
- un multiplexeur couplé aux sorties parallèles du dit au moins un registre à décalage pour délivrer en série au circuit de traitement de données les données stockées.

Différentes variantes d'implémentations sont décrites dans les revendications dépendantes.

### Description des figures

Différents aspects et avantages de l'invention vont apparaitre en appui de la description d'un mode préféré d'implémentation de l'invention mais non limitatif, avec référence aux figures ci-dessous :
La Figure 1 est une représentation schématique du système de communication de la présente invention;
La Figure 2 est une vue logique des niveaux hiérarchiques du système de communication de la présente invention;
La Figure 3 illustre une implémentation d'une cellule macro-pixels de la figure 2;
La Figure 4 est une vue logique d'une organisation en trois zones de mémorisation d'une cellule macro-pixels de la figure 2;
Les Figures 5-a et 5-b montrent un enchainement d'étapes pour écrire et lire des données série dans une colonne de registres de la figure 2.

### Description détaillée de l'invention

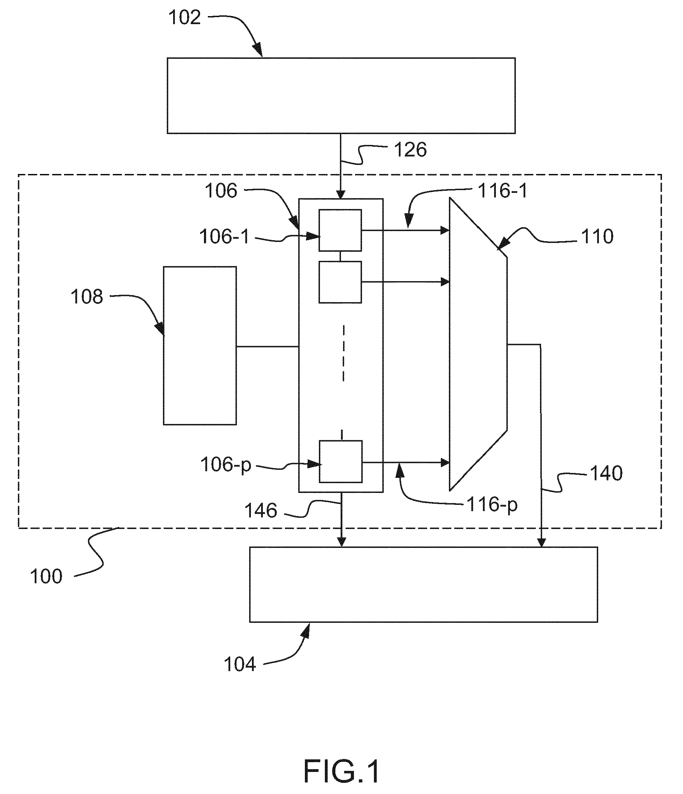

La figure 1 montre une représentation schématique du système de communication de la présente invention. Le système de communication (100) est une structure de mémorisation optimisée pour l'acquisition et le traitement de données. La description s'appuie sur un mode préférentiel d'un système de communication opérant entre un circuit d'acquisition de d'image (102) et un circuit (104) de traitement de données image ou valeurs de pixels.

Le système (100) comprend un bloc de stockage à décalage (106) de type registre à décalage couplé en entrée au circuit d'acquisition via un lien série (126) et en sortie au circuit de traitement (104) via un lien série (146).

Dans un mode préférentiel, le registre à décalage (106) comprend une pluralité de circuits unitaires de type bascule (106-1,106-p) reliés en série. Le registre à décalage comprend aussi des sorties parallèles (116-1,116-p) pour délivrer les valeurs contenues dans les bascules respectives (106-1,106-p).

Le registre comprend un port de contrôle 'lecture sans écriture' (non illustré) pour permettre la lecture parallèle des bascules en bloquant toute écriture dans le registre.

Un module de calcul d'adresse (108) est couplé au bloc (106) pour identifier les positions des données stockées dans les bascules, adresser le circuit unitaire déterminé et contrôler le multiplexeur 110.

Un bloc multiplexeur (110) est couplé au registre à décalage (106) pour recevoir les données du registre via les liens parallèles (116-1,116-p). Le multiplexeur est couplé en sortie au circuit de traitement de données (104) pour délivrer en série les données via un lien série (140).

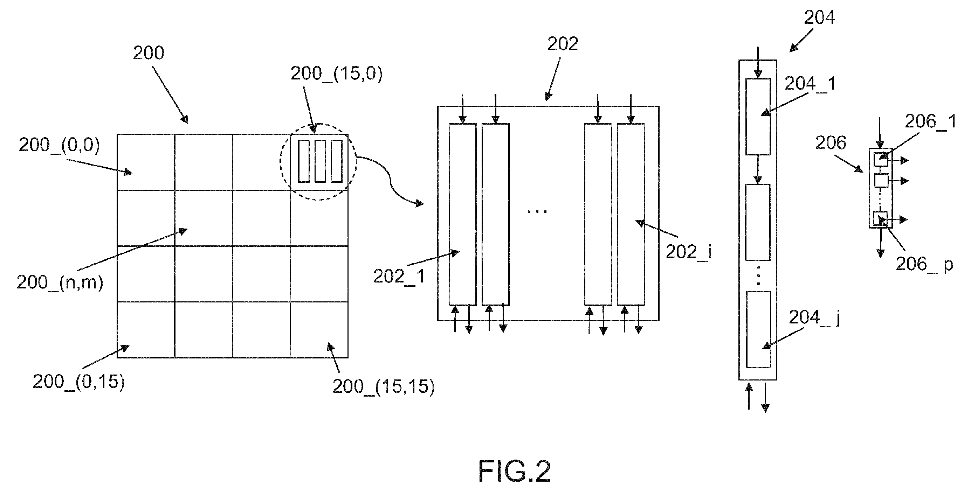

La figure 2 illustre sous une vue logique, l'organisation matricielle de mémorisation du système de communication de la présente invention dans une implémentation où plusieurs registres à décalage sont utilisés. Par sa conception en niveaux hiérarchiques de mémorisation, la solution proposée permet plusieurs opérations simultanées, telles que plusieurs écritures et plusieurs lectures simultanées de un ou plusieurs registres à décalage. Des données en provenance du circuit d'acquisition et des données en provenance du circuit de traitement peuvent être simultanément écrites dans différents registres à décalage, tout en utilisant d'autres registres pour lire des données afin de faire des opérations de traitement.

Comme illustré sur la figure 2, dans une implémentation préférentielle de traitement d'images, le système est organisé en quatre niveaux hiérarchiques (200, 202, 204, 206). Un niveau supérieur (200) ici appelé matrice de mémorisation est organisé en une matrice de cellules (200_n,m) ici appelées macro-pixels. Chaque macro-pixel (202) est une sous-matrice de mémorisation qui regroupe une pluralité de colonnes de mémorisation (202-1,202-i). Chaque colonne de mémorisation (204) regroupe une pluralité de registres à décalage (204-1,204-j), où chaque registre à décalage 206 constitue le dernier niveau de mémorisation et comprend des éléments de stockage unitaires (206-1,206-p) tels que décrits pour la figure 1.

Les sous-matrices de mémorisation (202) sont homogènes et la capacité maximale de mémorisation de chaque sous-matrice est au moins égale au volume de données d'un macro-pixel. Un exemple de capacité adapté à l'acquisition et au traitement de l'image est par exemple de 16x16 pixels.

Chaque sous-matrice de mémorisation est composée de colonnes de mémorisation (204), une colonne pouvant avoir une capacité de 16 pixels (ou plus) dans l'exemple précédent. Pour ce faire, chaque colonne de mémorisation est composée de plusieurs registres à décalage couplé en série, la sortie série d'un registre précédent devenant l'entrée série du registre suivant.

Dans une variante d'implémentation, un circuit de sélection est couplé à l'entrée de chaque registre d'une même colonne pour permettre de recevoir des données série d'un ou plusieurs registres à décalage de colonnes voisines et/ou recevoir des données série du circuit de traitement.

Chaque colonne d'une sous-matrice dispose de ports d'entrée de données externes : port d'entrée pouvant être connecté à la sortie d'un convertisseur analogique-numérique recevant des pixels en série suivant la technique dite de « rolling-shutter » sur une colonne de pixel d'un macro-pixel et port d'entrée de données pouvant être connecté à la sortie des éléments de calcul du circuit de traitement. Chaque colonne dispose également de port d'entrée/sortie pour communication avec les colonnes voisines.

Ces interfaces de données fonctionnent en mode série. Les colonnes composant une sous-matrice fonctionnent de manière concurrente et sont synchrones entre elle au sein d'un macro-pixel. De même, les sous-matrices fonctionnent indépendamment les unes des autres. Les sous-matrices peuvent soient fonctionner de manière synchrone ou asynchrone entre elles.

Chaque registre a une capacité de stockage au minimum égale à la plus grande dynamique de pixel autorisée. La plus grande dynamique supportée est celle donnée par l'interface analogique/numérique en sortie du circuit d'acquisition, celle d'un convertisseur analogique-numérique. Ainsi, dans l'exemple cité, une colonne de mémorisation est composée d'au moins 16 registres à décalage (204-1 à 204-16), chaque registre formant un mot de 16 bits de large.

Chaque colonne est répliquée 16 fois pour former un macro-pixel de 16x16 pixels, l'ensemble des macro-pixels étant organisés en une matrice de mémorisation (200) ayant une capacité au moins correspondant à celle de la zone d'acquisition.

Dans une telle implémentation matricielle, un seul module de calcul d'adresse est suffisant à toutes les colonnes d'un même macro-pixel afin d'adresser l'ensemble des positions des valeurs stockées.

Dans une application pour capteur d'image intelligent, la zone d'acquisition pourra avantageusement être une matrice de photodiodes organisée en macro-pixels de 16x16 pixels avec 16 circuits de conversion recevant les pixels en mode « rolling-shutter » et un processeur SIMD dédié au traitement d'image. Le processeur est préférentiellement organisé en une matrice d'éléments de calcul SIMD, chaque élément de calcul étant dédié à un macro-pixel.

L'homme de l'art appréciera la capacité maximum de la matrice de mémorisation en fonction de la surface disponible par macro-pixel et de la densité d'intégration de la technologie utilisée. Ainsi, l'espace total de mémorisation peut être découpé en plusieurs zones de mémorisation, chaque zone ayant sa propre dynamique. Les caractéristiques sont indépendantes entres chaque zone de mémorisation. Le partitionnement peut être fait en fonction du choix de la dynamique des données et des besoins en zone de mémorisation. Au minimum, chaque sous-matrice de mémorisation ne contient qu'un seul espace mémoire dont la dynamique des données est maximale. Au maximum, chaque sous-matrice de mémorisation est découpée en autant d'espace mémoire possible de profondeur déterminé par la dynamique minimum, par exemple 1 bit. Si le choix de la dynamique des pixels de l'image en cours d'acquisition est inférieur à la dynamique maximum possible, l'espace non-utilisé par l'image en cours d'acquisition est utilisable en écriture et en lecture par des éléments de calcul du circuit de traitement.

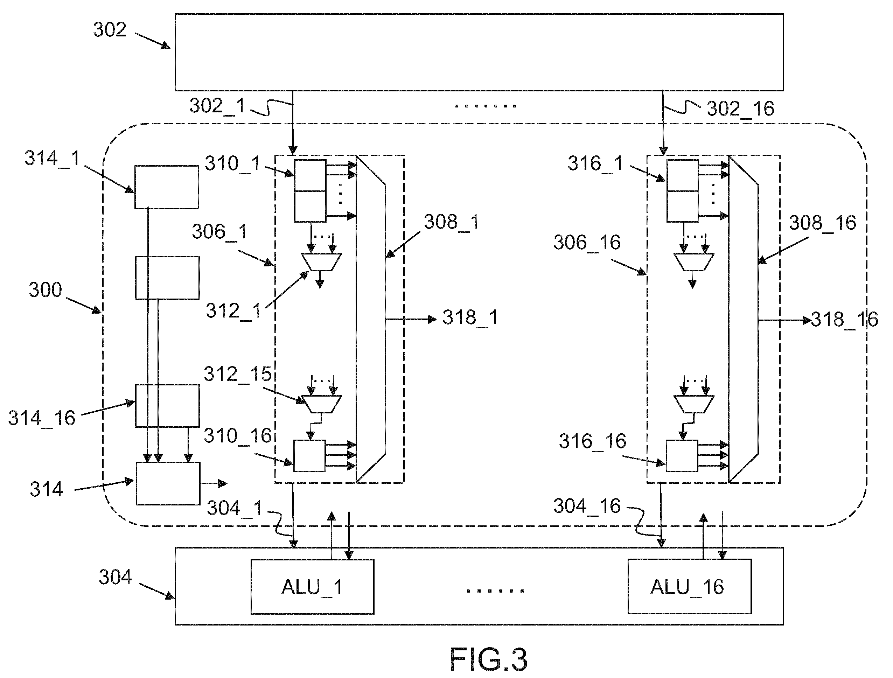

La figure 3 donne un exemple d'implémentation d'une cellule macro-pixel (300) 16x16 pixels. Pour des raisons de clarté dans la description, seuls des liens d'interconnexion avec les registres est-ouest de colonnes voisines sont représentés mais il est à noter que cette description n'est pas limitative et vaut pour des liens d'interconnexion avec des registres nord-sud de colonnes voisines. En effet, chaque colonne de registres à décalage est connectée à ses quatre colonnes voisines (nord, sud, est, ouest). Ces connexions se font via des liens séries. Les registres à décalages sont connectés de manière à pouvoir former une longue chaîne de registre à décalage, dans les deux directions (gauche/droite ou bas/haut). Par composition successive de décalage, des mouvements de fenêtres glissantes ou des mouvements complexes tels que des rotations d'image peuvent ainsi être réalisés.

L'homme du métier adaptera facilement la description à une extension des liens dans toutes les directions.

Une cellule macro-pixel (300) est composée de 16 colonnes de registres (306-1 à 306-16) et chaque colonne est composée d'au moins 16 registres. Ainsi la première colonne (306-1) contient au moins 16 registres (310-1 à 310-16) et la seizième colonne (306-16) contient au moins 16 registres (316-1 à 316-16) .

La cellule macro-pixel est couplée au circuit d'acquisition (302) via 16 liens série (302-1 à 302-16). L'interface de sortie du circuit d'acquisition n'est pas ici plus détaillé car il peut être réalisé par tout type connu de convertisseur analogique-numérique qui permet d'adapter le format des données pixel acquises par le circuit d'acquisition en mots de largeur prédéfinie. Dans le cas décrit, un mot est prédéfini à une dynamique de 16 bits. Chaque mot est délivré sur un lien série, ainsi un premier mot de 16 bits est délivré au premier lien série (302-1), et un macro-pixel peut délivrer jusqu'à 16 mots de 16 bits en parallèle sur chacun des liens série. Chaque colonne de 16 registres peut stocker au moins jusqu'à 16 mots de 16 bits.

La cellule macro-pixel est couplée en sortie au circuit de traitement (304) via des liens série (304-1 à 304-16) en sortie des registres et par des liens série en sortie des multiplexeurs 318. L'interface d'entrée du circuit de traitement n'est pas ici plus détaillée et dans une implémentation préférentielle, des unités de traitement de type Unité Arithmétique et Logique (ALU-1 à ALU-16) sont dédiées à chaque colonne du macro-pixel. Ainsi le premier lien série (304-1) de la première colonne (306-1) délivre des données en série à l'unité de traitement (ALU-1) pour effectuer des opérations localement.

De manière similaire, chaque lien série du multiplexeur (318-i) délivre des données en série via un lien série respectif au circuit de traitement.

Comme décrit précédemment, chaque registre dispose d'un port d'écriture série, d'un port de lecture série et de 16 ports de lecture parallèle.

Les ports de lecture parallèle des 16 registres d'une même colonne sont les 16x16 entrées d'un multiplexeur (308-1 à 308-16) qui a une sortie série (318-1 à 318-16) pour envoyer les données bit à bit vers l'unité dédiée (ALU-1 à ALU-16) dans le circuit de traitement.

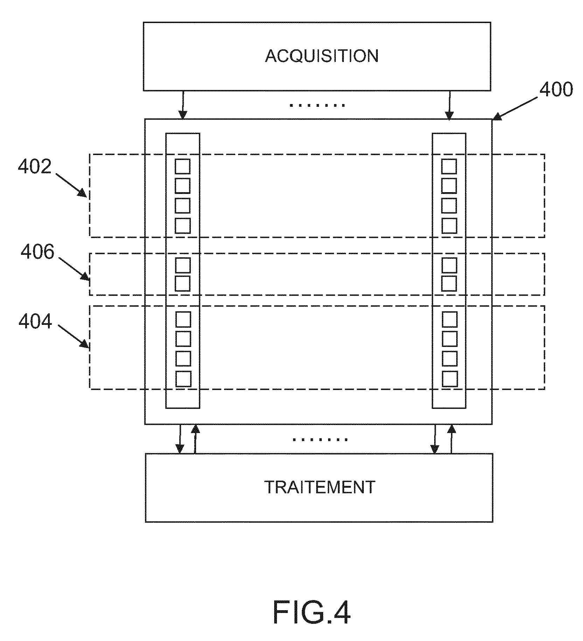

La sortie série d'un registre est l'entrée d'un multiplexeur (312-1 à 312-16) qui reçoit aussi les sorties série des quatre registres voisins (non illustré). De plus, comme il sera détaillé en rapport avec la figure 4, chaque multiplexeur peut recevoir via un lien série, des données de résultat temporaire de l'unité de traitement dédiée à la colonne respective.

L'adressage des données stockées dans un macro-pixel se fait par un circuit de comptage de position couplé à un circuit de génération d'adresse. Un compteur de position (314-1 à 314-16) est dédié à chaque colonne de registres, et chaque compteur de position est couplé à un générateur d'adresses (314) commun pour un macro-pixel. Le compteur de position permet par des incréments successifs de suivre la position des données écrites dans les registres quelque soit la provenance de la donnée (convertisseur analogique-numérique, unité de calcul, registre voisin). Il permet aussi de lire des données par incréments ou décréments successifs par adressage du premier ou dernier bit du mot lu.

Les compteurs de position sont connectés à un générateur d'adresse (314) qui délivre l'adresse physique de la donnée à lire dans la colonne respective.

L'adressage de ces bits combiné avec le compteur de position qui est synchronisé sur le mécanisme de « rolling-shutter » d'acquisition, permet d'affranchir la lecture des pixels de la position d'acquisition du « rolling-shutter » et donc de leur position dans les registres à décalage.

Un circuit de configuration (non illustré) permet de définir le nombre de bits à lire ou écrire pour chaque mot, selon une dynamique prédéfinie. Une dynamique choisie pourra permettre de lire ou écrire des mots de taille inférieure ou égale à la capacité maximum supportée par le circuit d'acquisition. Par exemple, pour une capacité d'acquisition maximum de 16 bits, une dynamique d'écriture peut être de 12 bits. L'espace non utilisé pour les données en cours d'acquisition est utilisé pour des opérations d'écriture et de lecture, comme décrit maintenant en référence à la figure 4.

La figure 4 montre sous une vue logique, un exemple de partitionnement d'une cellule macro-pixels en une sous-matrice de mémorisation (400) avec trois zones de mémorisation (402, 404, 406).

Le partitionnement est fait en fonction du choix de la dynamique des données et des besoins en zone de mémorisation. Au minimum, chaque sous-matrice de mémorisation ne contient qu'un seul espace mémoire dont la dynamique des données est maximale. Au maximum, chaque sous-matrice de mémorisation est découpée en autant d'espaces mémoire possible, de profondeur déterminée par la dynamique minimum, par exemple 1 bit.

Dans l'exemple de la figure 4, l'espace mémoire de la sous-matrice de mémorisation est découpé en trois espaces mémoire distincts répartis sur l'ensemble des colonnes de registres du macro-pixel. Chaque espace mémoire est caractérisé par sa dynamique de données, et ses ports d'écriture et de lecture. Dans l'exemple choisi, le premier espace (402) a une dynamique paramétrable pour l'acquisition de données. Le deuxième espace mémoire (404) est utilisé pour mémoriser les résultats de calcul temporaire issus des éléments de calcul et pour faire glisser les données vers la gauche ou la droite, ou vers le haut ou le bas vers des colonnes voisines de registres à décalage.

Le troisième espace mémoire (406) est dédié à la mémorisation des résultats finaux. Une telle configuration peut être utilisée pour des calculs de convolution par exemple.

L'écriture dans une zone mémoire d'une sous-matrice de mémorisation se fait en série par colonne de registres à décalage et en parallèle sur toutes les colonnes du macro-pixel. Quelque soit la taille de la zone de mémorisation pour l'acquisition, l'écriture dans les colonnes de registre à décalage se fait à la manière d'une fonction « push » où chaque donnée écrite pousse la donnée précédemment mémorisée tant que la profondeur de la zone réservée dans le registre à décalage n'est pas atteinte.

Une fois la dynamique d'acquisition choisie, l'acquisition des données se fait toujours sur la même zone de mémorisation en mettant à jour les valeurs précédentes, selon le mode d'écriture décrit ci-dessus. Ainsi, la position dans le registre à décalage des données est dépendante de la position du « rolling-shutter » d'acquisition. Les dispositifs d'adressage 314 gardent la trace de la position des données et permettent ainsi de faire la lecture des données par une adresse logique indépendante de la position du « rolling-shutter » par le multiplexeur 308.

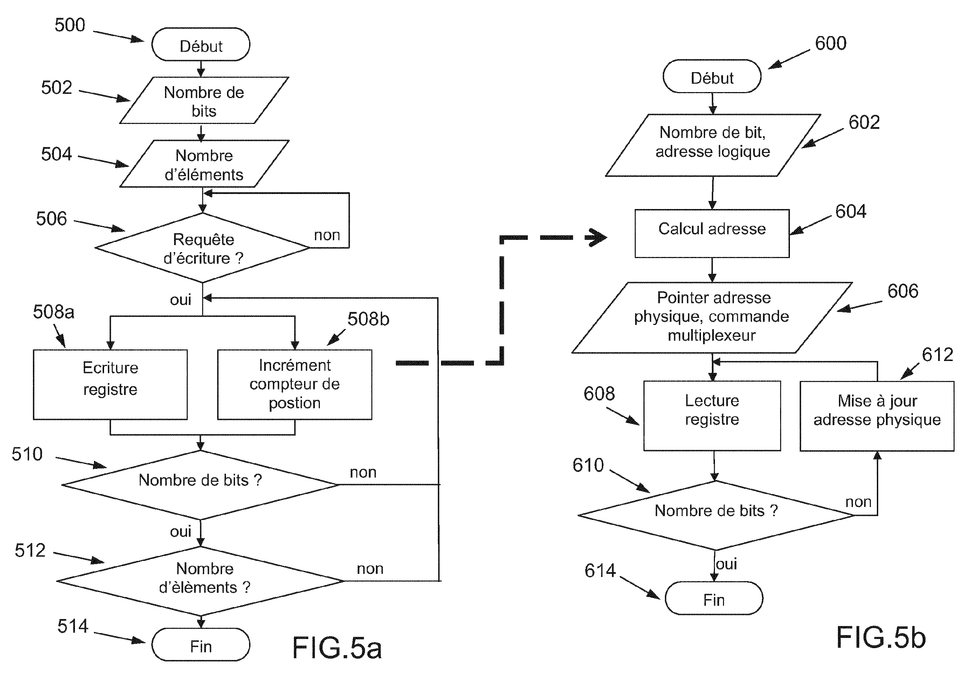

Les figures 5-a et 5-b montrent un enchainement d'étapes pour écrire et lire des données série dans une colonne de registres à décalage d'un macro-pixel.

Le procédé 500 de la figure 5-a décrit les étapes pour écrire une donnée stockée dans une colonne de registres. A l'étape 502, la dynamique des mots à écrire est définie (nombre de bits).

A l'étape 504, le nombre de mots à écrire dans une même colonne est défini.

Le procédé attend de détecter une requête d'écriture en étape 506 (boucle Non).

Quand une requête d'écriture est détectée (branche Oui), le procédé se poursuit aux étapes 508-a et 508-b où respectivement le premier bit est écrit dans le registre (508-a) et simultanément le compteur de position est incrémenté (508-b).

Puis à l'étape 510, le procédé teste si le nombre maximum de valeurs à écrire est atteint et si non, reboucle (branche Non) aux étapes 508-a et 508-b.

Quand tous les bits d'un même mot sont écrits (branche Oui), le procédé teste à l'étape 512 si tous les mots d'une même colonne sont écrits et si non, reboucle (branche Non) aux étapes 508-a et 508-b.

Quand tous les mots d'une même colonne sont écrits (branche Oui), le procédé se termine en 514.

De manière asynchrone, quand le compteur de position est incrémenté à l'étape 508-b, sa valeur permet de calculer l'adresse physique de la donnée écrite pour autoriser une lecture.

Le procédé 600 de la figure 5-b décrit les étapes pour lire une donnée stockée dans une colonne de registres. A l'étape 602, la dynamique du mot à lire est définie (nombre de bits) et l'adresse logique du mot est identifiée.

A l'étape 604, le procédé calcule l'adresse physique de la valeur à lire, grâce à l'information fournie par le compteur de position lors de l'étape 508-b du procédé d'écriture et de la dynamique définie à l'étape 602.

A l'étape 606, l'adresse réelle de la valeur demandée par le dispositif de calcul est calculée à partir de l'adresse logique fournie par le dispositif qui accède à la donnée et de l'adresse physique calculée dans l'étape 604. Cela permet de commander les multiplexeurs 308 qui adressent ainsi les bits demandés dans les registres à décalage.

Le procédé se poursuit à l'étape 608 où la donnée stockée à l'adresse physique calculée est lue.

A l'étape suivante 610, le procédé teste si toutes les valeurs du mot ont été lues. Si non, le procédé met à jour l'adresse physique de la prochaine valeur à lire et reboucle à l'étape 608 pour lire la donnée correspondante.

Quand toutes les valeurs sont lues, le procédé termine (614).

Tel que décrit, le procédé améliore avantageusement les délais d'acquisition et de traitement de données. En effet, la structure matricielle proposée permet donc la conservation du flux d'information sous forme série dans l'unité de mémorisation, simplifiant les écritures et communications avec les éléments voisins, éléments aussi traitant les informations en série. Le procédé permet d'opérer plusieurs accès d'écritures et de lectures simultanément et un accès de n'importe quelle partie du flux d'information mémorisé sans avoir besoin de connaître la position exacte des données dans les registres à décalage due au « rolling-shutter ». A titre d'exemple non limitatif, une séquence d'opérations simultanées peut être une écriture de données du circuit d'acquisition, une écriture de données issues d'un registre voisin de droite, une écriture de données issues d'un registre voisin de gauche, une écriture de données résultant d'un traitement, tout en effectuant différentes lectures de données vers des registres voisins ou vers le circuit de traitement.

Par ailleurs, le codage configurable des mots permet d'avoir simultanément des mots de taille différente, optimisant la taille de la matrice. Cette propriété est très intéressante dans le cas d'un capteur intelligent fortement intégré où la surface silicium pour la mémorisation est limitée, mais où les algorithmes demandent de grandes possibilités de mémorisation de variables diverses.

Il est intéressant de rappeler quelques avantages majeurs de la solution proposée :
- une compatibilité directe avec les circuits d'acquisition et de traitement série, sans recourir à un dispositif supplémentaire de remise en forme, et plus particulièrement avec les dispositifs de capture d'image fonctionnant en mode « rolling-shutter » ;
- la possibilité de supporter simultanément des codages de données de tailles différentes, sans perte de capacité de mémorisation ;
- un accès simultané en multiples écritures et lecture, sur des zones de mémorisation différentes ;
- un accès à des régions d'intérêt de taille variable.

La présente invention peut s'implémenter à partir d'éléments matériel et logiciel. Les blocs de mémorisation peuvent être des registres à décalage tels que décrits plus haut. Alternativement, une implémentation à partir de mémoires de type « Random Access Memory » (RAM) standard où un bloc RAM est utilisé pour une colonne d'une sous-matrice de mémorisation permet d'obtenir le même résultat.

## Revendications

1. Système de communication (100) pour opérer entre un circuit d'acquisition de données (102) et un circuit de traitement de données (104), comprenant:
- au moins un registre à décalage (106) comprenant une entrée série (126) pour recevoir et stocker des données en série du circuit d'acquisition de données et une sortie série (146) pour délivrer des données en série, ledit au moins un registre à décalage (106) comprenant de plus des sorties parallèles (116-1,116-p) pour délivrer en parallèle des données stockées dans ledit registre à décalage ;
- un circuit d'adressage (108) couplé audit au moins un registre à décalage (106) pour identifier les positions des données stockées dans ledit au moins un registre à décalage ; et
- un multiplexeur (110) couplé aux sorties parallèles (116-1,116-p) dudit au moins un registre à décalage pour délivrer en série au circuit de traitement de données les données stockées.

2. Le système de communication (100) selon la revendication 1 dans lequel ledit au moins un registre à décalage comprend une pluralité d'éléments de stockage (206-1,206-p) reliés en série pour stocker des données série et des moyens de contrôle (R/W) pour délivrer les données stockées vers les sorties parallèles (116-1,116-p).

3. Le système de communication (100) selon la revendication 1 ou 2 comprenant des moyens (202) pour coupler opérationnellement une pluralité de registres à décalage en au moins une colonne de registres (202-1, 202-i), chaque colonne (204) comprenant :
- une pluralité (j) de registres à décalage (204-j), la sortie série d'un registre (j-1) étant l'entrée série du registre suivant (j) ;
- des moyens d'identification (108) couplé à ladite au moins une colonne de (j) registres pour identifier les positions des données écrites dans la pluralité de registres à décalage ; et
- un multiplexeur (110) couplé à ladite au moins une colonne de registres pour délivrer au circuit de traitement des données provenant des sorties parallèles des (j) registres à décalage.

4. Le système de communication (100) selon la revendication 3 comprenant des moyens (200) pour regrouper opérationnellement une pluralité de colonnes de registres à décalage en une matrice de stockage (200-(n,m)) de capacité égale à celle du circuit d'acquisition.

5. Le système de communication (100) selon l'une quelconque des revendications 1 à 4 comprenant un circuit de sélection couplé audit au moins un registre à décalage pour sélectionner les données série reçues en entrée dudit au moins un registre à décalage, soit du circuit d'acquisition et/ou d'un ou plusieurs registres à décalage voisins et/ou du circuit de traitement.

6. Le système de communication (100) selon la revendication 5 comprenant un circuit de configuration couplé au circuit de sélection pour configurer le nombre de données série reçues du circuit d'acquisition et/ou d'un ou plusieurs registres à décalage voisins et/ou du circuit de traitement.

7. Le système de communication (100) selon la revendication 6 dans lequel les registres à décalages voisins sont dans une ou plusieurs colonnes.

8. Le système de communication (100) selon l'une quelconque des revendications 1 à 7 dans lequel le circuit de traitement de données comprend une pluralité d'unités de calcul (ALU), chaque unité de calcul étant couplée audit au moins un registre à décalage pour recevoir des données de la sortie série dudit au moins un registre à décalage et/ou des données des sorties parallèles.

9. Le système de communication (100) selon l'une quelconque des revendications 1 à 8 où le circuit d'acquisition de données comprend une matrice de pixels organisée en lignes et colonnes et un circuit de contrôle pour lire la matrice de pixels en mode rolling-shutter et pour délivrer en série au système de communication des valeurs de pixels.

10. Le système de communication (100) selon l'une quelconque des revendications 1 à 9 où le circuit d'acquisition est un système de vision intégré de type empilement (3D) et où le circuit de traitement de données est un processeur « Single Instruction Multiple Data » (SIMD).

11. Le système de communication (100) selon l'une quelconque des revendications 1 à 10 dans lequel la dite au moins une colonne de registres à décalage est une Random Access Memory.

12. Procédé de communication pour opérer entre un circuit d'acquisition de données et un circuit de traitement de données, comprenant les étapes de:
a) définir un nombre d'écritures et initialiser un compteur de position ;
b) détecter une requête d'écriture de données;
c) écrire et stocker dans un premier élément de stockage d'un registre à décalage une première donnée, ledit registre à décalage comprenant une entrée série pour recevoir des données en série du circuit d'acquisition de données et une sortie série pour délivrer des données en série, et comprenant de plus des sorties parallèles associées à chaque élément de stockage dudit registre pour délivrer en parallèle des données stockées dans lesdits éléments de stockage ;
d) identifier la position de la donnée stockée dans le registre à décalage ;
e) incrémenter le compteur de position,
f) répéter les étapes b) à e) pour le nombre d'écritures défini ;
g) détecter une requête de lecture ;
h) calculer l'adresse des données stockées dans le registre à décalage à partir des positions identifiées à l'étape (d) ;
i) lire par les sorties parallèles les données stockées dans le registre à décalage aux adresses calculées ; et
j) multiplexer les données lues pour délivrer au circuit de traitement de données les données en série.

13. Procédé selon la revendication 12 dans laquelle les étapes (c) d'écriture et (i) de lecture sont asynchrones.

14. Procédé selon les revendications 12 ou 13 dans lequel l'étape (c) d'écriture consiste à écrire des données du circuit de traitement de données.

## Patentansprüche

1. Kommunikationssystem (100) zum Arbeiten zwischen einer Datenerfassungsschaltung (102) und einer Datenverarbeitungsschaltung (104), das Folgendes umfasst:
- wenigstens ein Schieberegister (106), das einen seriellen Eingang (126) zum Empfangen und Speichern von Daten von der Datenerfassungsschaltung in Serie und einen seriellen Ausgang (146) zum Liefern von Daten in Serie umfasst, wobei der wenigstens eine Schieberegister (106) ferner parallele Ausgänge (116-1, 116-p) zum parallelen Liefern der in dem Schieberegister gespeicherten Daten umfasst;
- eine Adressierschaltung (108), die mit dem wenigstens einen Schieberegister (106) gekoppelt ist, um die Positionen der in dem wenigstens einen Schieberegister gespeicherten Daten zu identifizieren; und
- einen Multiplexer (110), der mit den parallelen Ausgängen (116-1, 116-p) des wenigstens einen Schieberegisters gekoppelt ist, um die gespeicherten Daten in Serie zu der Datenverarbeitungsschaltung zu liefern.

2. Kommunikationssystem (100) nach Anspruch 1, wobei das wenigstens eine Schieberegister mehrere in Serie geschaltete Speicherelemente (206-1, 206-p) zum Speichern von seriellen Daten und Steuermittel (R/W) zum Liefern der gespeicherten Daten zu den parallelen Ausgängen (116-1, 116-p) umfasst.

3. Kommunikationssystem (100) nach Anspruch 1 oder 2, das Mittel (202) zum betriebsmäßigen Koppeln mehrerer Schieberegister in wenigstens einer Registerspalte (202-1, 202-i) miteinander umfasst, wobei jede Spalte (204) Folgendes umfasst:
- mehrere (j) Schieberegister (204-j), wobei der serielle Ausgang eines Registers (j-1) der serielle Eingang des folgenden Registers (j) ist;
- Identifikationsmittel (108), die mit der wenigstens einen Registerspalte (j) gekoppelt sind, um die Positionen der in die mehreren Schieberegister geschriebenen Daten zu identifizieren; und
- einen Multiplexer (110), der mit der wenigstens einen Registerspalte zum Liefern von von den parallelen Ausgängen der Schieberegister (j) stammenden Daten zu der Verarbeitungsschaltung gekoppelt ist.

4. Kommunikationssystem (100) nach Anspruch 3, das Mittel (200) zum betriebsmäßigen Gruppieren von mehreren Schieberegisterspalten zusammen in einer Speichermatrix (200-(n,m)) mit einer Kapazität umfasst, die gleich der der Erfassungsschaltung ist.

5. Kommunikationssystem (100) nach einem der Ansprüche 1 bis 4, das eine Auswahlschaltung umfasst, die mit dem wenigstens einen Schieberegister gekoppelt ist, um die am Eingang des wenigstens einen Schieberegisters entweder von der Erfassungsschaltung und/oder von einem oder mehreren benachbarten Schieberegistern und/oder von der Verarbeitungsschaltung empfangenen seriellen Daten auszuwählen.

6. Kommunikationssystem (100) nach Anspruch 5, das eine mit der Auswahlschaltung gekoppelte Konfigurationsschaltung zum Konfigurieren der Menge an von der Erfassungsschaltung und/oder von einer oder mehreren benachbarten Schieberegistern und/oder von der Verarbeitungsschaltung empfangenen seriellen Daten umfasst.

7. Kommunikationssystem (100) nach Anspruch 6, wobei die benachbarten Schieberegister in einer oder mehreren Spalten sind.

8. Kommunikationssystem (100) nach einem der Ansprüche 1 bis 7, wobei die Datenverarbeitungsschaltung mehrere Recheneinheiten (ALU) umfasst, wobei jede Recheneinheit mit dem wenigstens einen Schieberegister gekoppelt ist, um Daten vom seriellen Ausgang des wenigstens einen Schieberegisters und/oder Daten von den parallelen Ausgängen zu empfangen.

9. Kommunikationssystem (100) nach einem der Ansprüche 1 bis 8, wobei die Datenerfassungsschaltung eine Matrix von Pixeln umfasst, die zu Reihen und Spalten organisiert ist, und eine Steuerschaltung zum Lesen der Pixelmatrix im Rolling-Shutter-Modus und zum Liefern von Pixelwerten zu dem Kommunikationssystem in Serie.

10. Kommunikationssystem (100) nach einem der Ansprüche 1 bis 9, wobei die Erfassungsschaltung ein integriertes Anzeigesystem des Stapeltyps (3D) ist und wobei die Datenverarbeitungsschaltung ein SIMD-("Single Instruction Multiple Data")-Prozessor ist.

11. Kommunikationssystem (100) nach einem der Ansprüche 1 bis 10, wobei die wenigstens eine Schieberegisterspalte ein Direktzugriffsspeicher ist.

12. Kommunikationsverfahren zum Arbeiten zwischen einer Datenerfassungsschaltung und einer Datenverarbeitungsschaltung, das die folgenden Schritte beinhaltet:
a) Definieren einer Anzahl von Schreiboperationen und Initialisieren eines Positionszählers;
b) Erkennen einer Datenschreibanforderung;
c) Schreiben und Speichern eines ersten Datenelements in einem ersten Speicherelement eines Schieberegisters, wobei das Schieberegister einen seriellen Eingang zum Empfangen von Daten in Serie von der Datenerfassungsschaltung und einen seriellen Ausgang zum Liefern von Daten in Serie umfasst und ferner mit jedem Speicherelement des Registers assoziierte parallele Ausgänge zum parallelen Liefern der in dem Speicherelement gespeicherten Daten umfasst;
d) Identifizieren der Position des in dem Schieberegister gespeicherten Datenelements;
e) Inkrementieren des Positionszählers;
f) Wiederholen der Schritte b) bis e) für die definierte Anzahl von Schreibvorgängen;
g) Erkennen einer Leseanforderung;
h) Berechnen der Adresse der in dem Schieberegister gespeicherten Daten auf der Basis der in Schritt (d) identifizierten Positionen;
i) Lesen, durch die parallelen Ausgänge, der in dem Schieberegister gespeicherten Daten an den berechneten Adressen; und
j) Multiplexieren der gelesenen Daten, um die Daten in Serie zu der Datenverarbeitungsschaltung zu liefern.

13. Verfahren nach Anspruch 12, wobei die Schritte (c) des Schreibens und (i) des Lesens asynchron sind.

14. Verfahren nach Anspruch 12 oder 13, wobei Schritt (c) des Schreibens das Schreiben von Daten aus der Datenverarbeitungsschaltung beinhaltet.

## Claims

1. A communication system (100) for operating between a data acquisition circuit (102) and a data processing circuit (104), comprising:
- at least one shift register (106) comprising a series input (126) for receiving and storing data in series from said data acquisition circuit and a series output (146) for delivering data in series, said at least one shift register (106) further comprising parallel outputs (116-1, 116-p) for delivering the data stored in said shift register in parallel;
- an addressing circuit (108) coupled to said at least one shift register (106) for identifying the positions of the data stored in said at least one shift register; and
- a multiplexer (110) coupled to said parallel outputs (116-1, 116-p) of said at least one shift register for delivering the stored data to said data processing circuit in series.

2. The communication system (100) according to claim 1, wherein said at least one shift register comprises a plurality of storage elements (206-1, 206-p) connected in series in order to store series data and control means (R/W) for delivering the stored data to said parallel outputs (116-1, 116-p).

3. The communication system (100) according to any one of claims 1 to 2, comprising means (202) for operationally coupling together a plurality of shift registers in at least one register column (202-1, 202-i), each column (204) comprising:
- a plurality (j) of shift registers (204-j), the series output of a register (j-1) being the series input of the next register (j);
- identification means (108) coupled to said at least one column (j) of registers for identifying the positions of data written in said plurality of shift registers; and
- a multiplexer (110) coupled to said at least one column of registers for delivering data to said processing circuit that originates from said parallel outputs of said shift registers (j).

4. The communication system (100) according to claim 3, comprising means (200) for operationally grouping together a plurality of columns of shift registers into a storage matrix (200-(n, m)) with a capacity that is equal to that of said acquisition circuit.

5. The communication system (100) according to any one of claims 1 to 4, comprising a selection circuit coupled to said at least one shift register, for selecting the series data received as input from said at least one shift register either from said acquisition circuit and/or from one or more neighbouring shift registers and/or from said processing circuit.

6. The communication system (100) according to claim 5, comprising a configuration circuit coupled to said selection circuit for configuring the amount of series data received from said acquisition circuit and/or from one or more neighbouring shift registers and/or from said processing circuit.

7. The communication system (100) according to claim 6, wherein said neighbouring shift registers are in one or more columns.

8. The communication system (100) according to any one of claims 1 to 7, wherein said data processing circuit comprises a plurality of computation units (ALU), each computation unit being coupled to said at least one shift register so as to receive data from said series output of said at least one shift register and/or data from said parallel outputs.

9. The communication system (100) according to any one of claims 1 to 8, where said data acquisition circuit comprises a matrix of pixels organised in rows and columns and a control circuit for reading said matrix of pixels in rolling-shutter mode and for delivering pixel values to said communication system in series.

10. The communication system (100) according to any one of claims 1 to 9, where said acquisition circuit is an integrated display system of the stack type (3D) and where said data processing circuit is a "Single Instruction Multiple Data" (SIMD) processor.

11. The communication system (100) according to any one of claims 1 to 10, wherein said at least one column of shift registers is a Random Access Memory.

12. A communication method for operating between a data acquisition circuit and a data processing circuit, comprising the steps of:
a) defining a number of writing operations and initialising a position counter;
b) detecting a data writing request;
c) writing and storing a first data item in a first storage element of a shift register, said shift register comprising a series input for receiving data in series from said data acquisition circuit and a series output for delivering data in series, and further comprising parallel outputs associated with each storage element of said register for delivering the data stored in said storage element in parallel;
d) identifying the position of the data stored in said shift register;
e) incrementing said position counter;
f) repeating steps b) to e) for the defined number of writing operations;
g) detecting a read request;
h) computing the address of the data stored in said shift register on the basis of the positions identified during step (d);
i) reading, through the parallel outputs, the data stored in said shift register at the computed addresses; and
j) multiplexing the read data in order to deliver the data in series to said data processing circuit.

13. The method according to claim 12, wherein said steps (c) of writing and (i) of reading are asynchronous.

14. The method according to any one of claims 12 or 13, wherein said step (c) of writing involves writing data from said data processing circuit.
